Europäisches Patentamt

European Patent Office

Office européen des brevets

(11) Publication number: **0 087 399**
**B1**

(12) **EUROPEAN PATENT SPECIFICATION**

(45) Date of publication of patent specification: **28.05.86**

(51) Int. Cl.⁴: **B 29 C 55/08**

(21) Application number: **83830040.8**

(22) Date of filing: **23.02.83**

(54) Apparatus for transversely stretching a foil of plastic material.

(30) Priority: **24.02.82 IT 1982782**

(43) Date of publication of application:
**31.08.83 Bulletin 83/35**

(45) Publication of the grant of the patent:
**28.05.86 Bulletin 86/22**

(84) Designated Contracting States:
**AT BE CH DE FR GB LI LU NL SE**

(56) References cited:
**DE-B-1 111 811**
**GB-A- 849 436**
**GB-A- 959 951**
**US-A-2 560 038**
**US-A-3 004 284**
**US-A-3 148 410**
**US-A-3 471 606**

(73) Proprietor: **ALFATHERM INDUSTRIALE S.p.A.**
**Via Marconi, 25**
**Venegono Superiore (IT)**

(72) Inventor: **Aguzzi, Enzo**
**Via Roma 28 bis**
**Vedano Olona (IT)**
Inventor: **Fiore, Giovanni**
**Via Monte Generoso, 29**
**Vedano Olona (IT)**

(74) Representative: **Caregaro, Silvio**
**c/o Società Italiana Brevetti S.p.A. Via**
**Carducci 8**
**I-20123 Milano (IT)**

Courier Press, Leamington Spa, England.

## Description

This invention relates to an apparatus for transversely stretching a web or film of plastic material. Such transversal stretching accomplishes either or both of the following purposes:

1) obtaining a pre-stretched film suitable for shrinking onto an enveloped product;

2) permanently extending the width of a plastic film.

Plastic films or foils are usually stretched either longitudinally or transversely or both, in order to improve their qualities, to reduce the thickness, to impart desired properties along a selected direction, etc. Two known stretching techniques are commonly employed, i.e. a longitudinal stretching and a transversal stretching. Longitudinal stretching is particularly suitable to be carried out by means of a continuous process wherein the plastic web is driven between a group of rolls rotating at different speeds.

Transversal stretching is easily obtained in a continuous process since it requires that the moving edges of the film are gripped, laterally extended and then released. To this purpose several apparatuses have been proposed that only differ for the modalities and the members employed for progressively gripping, stretching and releasing the edges of the moving web. A known apparatus of this kind is provided, on both sides, with a series of pliers being able to engage the foil edges for only a length of the path and then release them after the film has been spread out to the desired width. It is evident that such devices are rather complex, raise the costs of the apparatus and furthermore they are noisy, difficult to be properly adjusted and have mechanical limits for the operating speed.

In U.S. Patent No. 3471606 it is disclosed an apparatus for continuously and uniformly gripping the moving edge margins of an extruded film to prevent substantial reduction in width, which could be used to transversely extend the film so gripped. Such apparatus provides for web guides comprising chains for gripping the film, which can be pivotally brought into parallel or diverging alignment.

An apparatus for biaxially stretching plastic film by gripping the film edges between counter rotating convex surfaces is disclosed in U.S. Patent No. 3004284 wherein means are further provided for changing the angle formed between the gripping devices and the advancing direction of the film.

An apparatus for stretching a plastic film both longitudinally and transversely at the same time is disclosed in U.S. Patent No. 3148410. Such apparatus provides for two or more pairs of angled drawing devices comprising driven wheels and idle wheels for advancing the film and stretching the same both longitudinally and transversely. The driven wheels are connected together by a drive means, such as a chain or a belt and pairs of drawing devices are placed one after the other and mechanically coupled by the drive means to stretch the film to the desired degree. Such apparatus is expressly designed for a high surface stretching ratio, but is unsatisfactory for several reasons.

Namely the film edges are gripped between reduced and not smooth surfaces (the idle wheels and the upper surface of the chain or belt). The tension of the drive means contacting the film cannot be properly adjusted to the film characteristics since this member must transmit the increasing speed requested for the longitudinal stretching, and the film is highly stressed travelling along a strongly undulated path formed between the wheels. As a result the film is likely to be broken when the edges have peripheral defects or voids and the apparatus is not suitable for stretching the film at high speed. Moreover the operating temperature of the film cannot be easily controlled since the film is not in contact with members having an extended surface that can be heated at the desired temperature.

It is therefore an object of the present invention to provide for an apparatus for transversely stretching a film of plastics material whereby the web edges are gripped and temporarily held by simple but effective means without any discontinuity and in a smooth way.

It is a further object of the invention to realize an apparatus whereby the width of a given film web can be increased through a transversal stretching of the continuously advancing film.

The invention consists of an apparatus for transversely stretching a continuously advancing web of plastics film comprising at least one pair of interspaced opposed drawing devices mutually angled divergently in the direction of travel of the film, each of said devices comprising a first plurality of driven rolls and a second plurality of idle rolls between which the edge of the film web is advanced, the axes of the driven and idle rolls being parallel to each other in each drawing devices, the apparatus being characterized by the fact that the film edge is gripped between at least one endless belt of elastically deformable material having a rounded cross section and the surfaces of said driven rolls mounted on a support member, said belt extending along a closed path of adjustable length and being housed in at least one circumferential groove on the surface of the idle rolls, said idle rolls having a diameter smaller than the diameter of the driven rolls and being mounted on a frame connected to said support member in such a way that a pair of idle rolls is substantially tangential to each driven roll.

These and further (preferred) features of the invention, as well as the associated advantages, will become evident from the following description of a preferred non-limiting embodiment illustrated in the attached drawings in which:

FIGURE 1 is a schematic front view of the apparatus employing two diverging assemblies according to the invention;

FIGURE 2 is a side view of one of the assemblies, also illustrating the input and output rolls;

*FIGURE 3 and 4* show two details of the rolls mounted on the assemblies;

*FIGURE 5* illustrates the film path between the rolls; and

*FIGURE 6* is a cross-section of the assembly along the line I—I of Fig. 1.

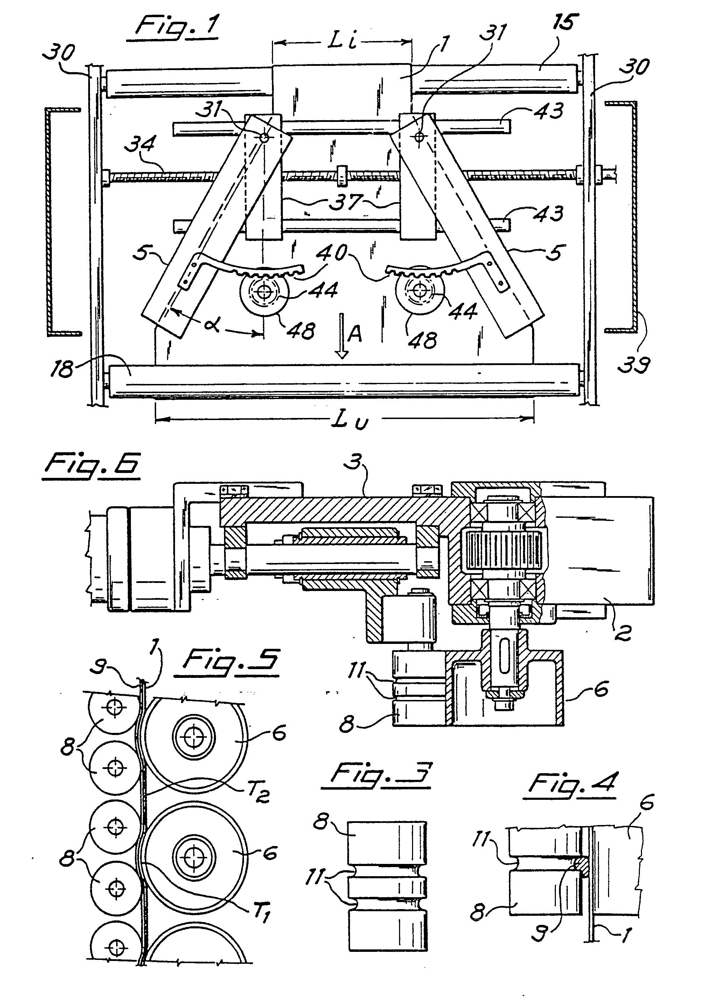

Fig. 1 schematically shows a front view of the apparatus for transversely stretching a web of plastic film 1 advancing along the direction shown by arrow A. The film unwinds from a supply roll and is successively wound onto another roll (not shown) passing through a group of incoming rolls 15 and a group of outcoming rolls 18 (only one for each group shown in Fig. 1). The incoming web has a width indicated by Li that is lesser than the width Lu of the outcoming film after the stretching. The gripping means for the stretching includes two assemblies 5 positioned at both sides of the web and forming an angle with the advancement direction of the film. More particularly the longitudinal axes of the assemblies form an angle a (adjustable according to the desired degree of stretching as will be illustrated later) with respect to the film axis.

The assemblies 5 are pivotally mounted by pins 31 on base members 37 movable along guide shafts 43 and the threaded rod 34 with respect to the main frame 30. Threaded rod 34 can be rotated by motor means (not shown) for the lateral positioning of the assemblies 5 along guide rods 43 in order to fit the apparatus to the width of the incoming film. At their lower portion each assembly is provided with a rack sector 40 engaging with a pinion 44 rotated by a motor 48 to vary the divergence angle a of the assembly, i.e. the degree of stretching. Preferably the apparatus is enclosed in a tunnel 39 maintaining a desired temperature.

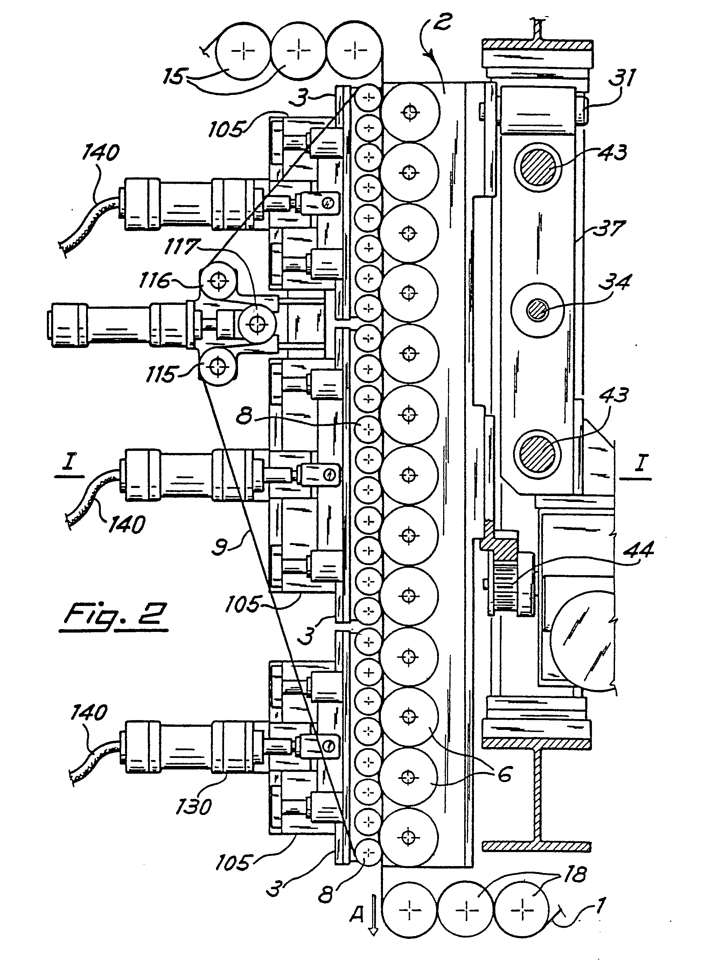

With reference to Fig. 2 there is illustrated a preferred structure of one of the diverging assemblies 5. Each assembly is formed by three elements 105 disposed one after the other and rigidly connected between each other. The assembly includes a common support member 2 carrying cylindrical rolls 6 having their axes parallel. Each element 105 includes a body or frame 3 carrying cylindrical rolls 8, of a smaller diameter, having their axes parallel to each other and to the ones of rolls 6. Two rolls 8 are provided for each roll 6, the axes of rolls 8 being symmetrically positioned with respect to the axis of each roll 6. The assembly is pivotally mounted on base member 37 by means of a pin 31 so that the divergency angle a can be varied according to the desired degree of stretching. The frame members 3 are movable with respect to support member 2 in order to position the film edge between the rolls before starting the apparatus. Rolls 6 are driven at a constant speed thanks to known driving means, not shown in the drawings for sake of simplicity, whereas rolls 8 are idle rolls rotating about their axes thanks to the friction engagement with belts that will be described later.

In the figures the rolls are shown in the working configuration wherein rolls 8 are substantially tangential to rolls 6 and with their axes offset. Two endless belts 9 are fitted between the rolls and suitable roller return and tensioning means comprise pulleys 115, 116, 117, the latter being movable to adjust the belt tension. The upper portions 130 of each element 105 receive the necessary supplies of fluid under pressure for the operations and of a heating fluid schematically shown with the reference numeral 140.

In operation the edges of foil 1 are driven between rolls 6 and 8, thanks to the friction engagement with belts 9, mainly at the tangency points, that are, as a matter of fact, tangency arcs. The belts are of an elastically deformable material able to retain its properties even at a rather high temperature and are compressed at the tangency points holding the foil edges against rolls 6 so that the film is compelled to advance. In correspondence of the upper arc T1 the foil is kept into contact with the surface of rolls 6 whereas in correspondence of the arc T2 a certain release is allowed between the belt and the foil (see Fig. 5).

From the above description it is evident that the edges of the foil are effectively held between the groups of rolls 6 and 8 so as to advance the plastic film and at the same time spreading the same toward the sides realizing a desired degree of transversal stretching.

Figs. 3 and 4 show one of the rolls 8 and a detail of the contact area between rolls 6 and 8, respectively. According to the preferred embodiment shown in the drawings, rolls 8 are provided with two circumferential grooves 11 partially housing belts 9 that have a circular or elliptical cross-section. As can be seen from Fig. 4 the distance between the axes of rolls 6 and 8 is not such as to cause a real contact between the rolls, but the gap is small enough that foil 1 is engaged between the rolls surfaces when the belts are compressed and squashed against the rolls. More particularly the belt, than can be of neoprene, is subjected to a transversal deformation (as shown in Fig. 4) wedging itself in the gap between the rolls surfaces to an extent depending upon the force required to maintain the engagement. This way one obtains a progressive and smooth gripping preventing any breakage of the foil 1 that might otherwise happen due to the resistance opposed by the foil when the edges are spread apart. The system further allows for the regular passage of edge portions that are torn or damaged ensuring a much more effective gripping compared with that of the pliers employed in the art. As in the prior art the outer edges of the film are subsequently trimmed of about 10—15 cm on each side. Anyhow the prior art devices are generally unable to correctly stretch the film in presence of peripheral defects, often causing even the breakage of the film. In such cases all these inconveniences are overcome by the apparatus of the invention, thus improving the quality of the product and the yield.

There are provided two belts 9, both to evenly distribute the stresses and as a safety since in case a belt breaks the operation is not stopped. As an alternative, a single flat belt extending for a substantial length of the rolls can replace the illustrated rounded belts.

It is preferable, but not strictly required, that the rolls surfaces are smooth and still preferably the diverging assemblies are enclosed in a tunnel kept at a predetermined constant temperature in a known manner, but other heating means can be used.

According to the invention the plastic foil 1 is heated before reaching the assemblies 5 and to this purpose some of the advancing rolls 15 are heated. In some of the rolls a heated fluid is circulated, e.g. oil under pressure so that after passing the rolls 15 the temperature of foil 1 is substantially equal to the one required for the stretching operation (between 70°C and 150°C according to the materials and to the desired stretching features).

The foil is then applied to the diverging assemblies 5, the rolls 6 of which can also be heated by a heating fluid circulating inside them to maintain the film web at the desired temperature. On coming out from assemblies 5 the stretched film is carried by another group of driven rolls 18, substantially similar to those 15 having the purpose of cooling the stretched film. Preferably at least some of these rolls are supplied with a cooling fluid circulating inside them. The cooling is preferably a fast one in case the film is stretched to obtain a shrinkable foil, whereas such cooling is slower in case the foil has to definitively retain the transversal size. The diameters of rolls 15 and 18 are relatively small so that they can be positioned as near as possible to the assemblies 5 for a better control of the stretching conditions. Thus it is possible to avoid any undue cooling of the film when passing from rolls 15 to the rolls 6 of the assemblies. In certain applications rolls 6 need not to be heated since the film does not significantly cools travelling along the assemblies and the structure of the apparatus is much simpler. The diameters of rolls 6 and 8 depend upon several conditions and upon the desired stretching degree. The best results were obtained, as for the smoothness of the engagement, using rolls 6 having a diameter of 2—5 times that of rolls 8.

As stated above, the process is preferably carried out at a temperature ranging from 70 to 150°C and this is the temperature of rolls 15 and in case of rolls 6. Belts 9 are subjected to some wearing that is generally compensated by their elasticity and anyhow these parts are to be replaced after a certain number of working hours in view of their low cost and easy replacement.

The apparatus is quite advantageous not only for stretching foils of plastic materials that are later to be shrinked onto wrapped articles. By suitably choosing the working temperature it is possible to obtain a permanent enlargement of the film, i.e. a non shrinkable web having a width larger than the original film. For example when a PVC film is used, if the stretching process is carried out at a temperature of 70—80°C one obtains a stretched film that substantially shrinks back to the original size when subsequently heated. In case the stretching is carried out at a temperature of about 130—140°C the deformation is substantially permanent and the film does not appreciably shrinks even if later heated. This is a very important feature since the standard widths of plastic foils have commonly been in the order of 100—110 cm and the production machines were dimensioned to obtain (after trimming the outer edges) a foil having such a width. More recently there has been a request for wider foils, in the order of 130—140 cm and the newer machines have been built for producing a web of this measure, or in case a measure that is double of the standard and will be longitudinally cut to form two films. The old machines would therefore become obsolete for a number of applications since it is not possible to replace the rolls with longer ones. By using the apparatus of the present invention, it is possible to permanently stretch, i.e. enlarge, a 110 cm foil produced by an old machine up to a width of 140 cm without resorting to a new machine, of course giving up to the shrinking properties. This use of the apparatus is commercially very interesting since it allows for a reconditioning of machines already installed enlarging their field of use.

The apparatus is noiseless due to the absence of jerks movement, reliable even on ruined film edges and exhibits a high operating speed without any difficult adjustment or tuning.

Although the invention has been disclosed with reference to a preferred embodiment, it is not to be limited to it. The scope of the invention extends within the scope of claim 1 to all the obvious changes and/or modifications that will be evident to the one skilled of the art and that anyhow provide for the transversal stretching of a moving plastic web by means of two groups of co-operating rolls and at least an elastically deformable belt for the engagement with each edge of web to be transversely stretched.

**Claims**

1. An apparatus for transversely stretching a continuously advancing web of plastics film (1) comprising at least one pair of interspaced opposed drawing devices mutually angled divergently in the direction of travel of the film, each of said devices comprising a first plurality of driven rolls (6) and a second plurality of idle rolls (8) between which the edge of the film web is advanced, the axes of the driven and idle rolls being parallel to each other in each drawing device, characterized by the fact that the film edge is gripped between at least one endless belt (9) of elastically deformable material having a rounded cross section and the surfaces of said driven rolls (6) mounted on a support member (2), said belt (9) extending along a closed path of adjustable length and being housed in at least one circumferential groove (11) on the surface of the idle rolls (8), said idle rolls (8) having a diameter smaller than the diameter of the driven rolls (6) and being mounted on a frame (3, 105) connected to said support member (2) in such a way that a pair of idle rolls (8) is substantially tangential to each driven rolls (6).

2. An apparatus as claimed in claim 1, characterized by the fact that at least some of said driven rolls (6) are kept at a first constant temperature by a fluid circulating inside them.

3. An apparatus as claimed in claim 2, characterized by the fact that said first constant temperature is comprised between 70°C and 150°C.

4. An apparatus as claimed in claim 1 or 2, characterized by the fact that the diameter ratio of the driven rolls (6) to the idle rolls (8) is comprised between 2:1 and 5:1.

5. An apparatus as claimed in claim 4, characterized by the fact that each support member (2) is pivotally connected to a base member (37), the base members being movable along a pair of guide shafts (43, 43) by means of a threaded rod (34) engaging with the base members for laterally moving the drawing devices (5), and each support member carries a rack curved portion (40) engaging with the pinion (44) of a motor (48) to change the angle formed between the drawing devices and the direction of travel of the film.

6. An apparatus as claimed in claim 5, characterized by the fact that said drawing devices (5) are housed within a tunnel (39) kept at a constant temperature.

**Patentansprüche**

1. Vorrichtung zum Querverstrecken einer kontinuierlich vorgeschobenen Bahn eines Plastikfilms (1) mit zumindest einem Paar im Abstand befindlicher, gegenüberliegender Auszieheinrichtungen, die gemeinsam einen in Bewegungsrichtung des Filmes divergierenden Winkel bilden, wobei jede Einrichtung eine erste Mehrzahl von angetriebenen Walzen (6) und eine zweite Mehrzahl von nicht angetriebenen Walzen (8) umfaßt, zwischen welchen die Kante der Filmbahn vorgeschoben wird, und wobei die Achsen der angetriebenen und der nicht angetriebenen Walzen in jeder Auszieheinrichtung parallel zueinander sind, dadurch gekennzeichnet, daß die Filmkante zwischen zumindest einem Umlaufband (9) aus elastisch verformbaren Material mit abgerundetem Querschnitt und der Oberfläche der angetriebenen, auf einem Trägerteil (2) angeordneten Walzen (6) erfaßt, wobei sich dieses Band (9) entlang einer geschlossenen Bahn von einstellbarer Länge erstreckt und in zumindest einer Umfangsnut (11) an der Oberfläche der nicht angetriebenen Walzen (8) untergebracht ist, und wobei die nicht angetriebenen Walzen (8) einen Durchmesser haben, der geringer als der Durchmesser der angetriebenen Walzen (6) ist und auf einem Rahmen (3, 105) angeordnet sind, der mit dem Trägerteil (2) so verbunden ist, daß ein Paar der nicht angetriebenen Walzen (8) zu jeder angetriebenen Walze (6) im wesentlichen tangential ist.

2. Vorrichtung nach Anspruch 1, dadurch gekennzeichnet, daß zumindest einige der angetriebenen Walzen (6) durch ein in ihnen zirkulierendes Fluid auf einer ersten konstanten Temperatur gehalten sind.

3. Vorrichtung nach Anspruch 2, dadurch gekennzeichnet, daß die erste konstante Temperatur zwischen 70°C und 150°C liegt.

4. Vorrichtung nach Anspruch 1 oder 2, dadurch gekennzeichnet, daß das Verhältnis des Durchmessers der angetriebenen Walzen (6) zu den nicht angetriebenen Walzen (8) zwischen 2:1 und 5:1 liegt.

5. Vorrichtung nach Anspruch 4, dadurch gekennzeichnet, daß jeder Trägerteil (2) an dem Basisteil (37) schwenkbar befestigt ist, wobei die Basisteile mittels einer Gewindestange (34), die in die Basisteile zwecks seitlicher Bewegung der Zugeinrichtungen (5) eingreift, entlang eines Paars Führungsachsen (43, 43) bewegbar sind und daß jeder Trägerteil einen gebogenen Zahnstangenteil (40) trägt, der in das Ritzel (44) eines Motors (48) zur Änderung des zwischen den Auszieheinrichtungen gebildeten Winkels und der Bewegungsrichtung des Films eingreift.

6. Vorrichtung nach Anspruch 5, dadurch gekennzeichnet, daß die Auszieheinrichtungen (5) in einem auf einer konstanten Temperatur gehaltenen Tunnel (39) untergebracht sind.

**Revendications**

1. Dispositif destiné à étirer transversalement une bande de pellicule (1) en matière plastique avançant de manière continue comprenant au moins une paire de dispositifs d'étirage opposés, espacés, formant mutuellement un angle divergent par rapport au sens de la course de la pellicule, chacun desdits dispositifs comprenant un premier nombre de cylindres entraînés (6) et un second nombre de cylindres fous (8) entre lesquels le bord de la bande de pellicule avance, les axes des cylindres entraînés et des cylindres fous étant parallèles les uns aux autres dans chaque dispositif d'étirage, caractérisé en ce que le bord de la pellicule est serré entre au moins une courroie sans fin (9) faite d'un matériau élastiquement déformable ayant une section transversale arrondie et les surfaces desdits cylindres entraînés (6) montées sur un organe de support (2), ladite courroie (9) s'étendant le long d'un parcours fermé de longueur réglable et étant logée dans au moins une cannelure (11) circonférentielle à la surface des cylindres fous (8), les cylindres fous (8) ayant un diamètre plus réduit que le diamètre des cylindres entraînés (6) et étant montés sur un cadre (3, 105) relié à l'organe de support (2) de façon qu'une paire de cylindres fous (8) soit sensiblement tangentielle à chacun des cylindres entraînés (6).

2. Dispositif selon la revendication 1, caractérisé en ce qu'au moins certains desdits cylindres entraînés (6) sont maintenus à une première température constante par un fluide circulant à l'intérieur.

3. Dispositif selon la revendication 2, caractérisé en ce que ladite première température constante est comprise entre 70°C et 150°C.

4. Dispositif selon la revendication 1 ou 2, caractérisé en ce que le rapport des diamètres des cylindres entraînés (6) et des cylindres fous (8) est compris entre 2:1 et 5:1.

5. Dispositif selon la revendication 4, caractérisé en ce que chaque organe de support (2) est relié de manière pivotante à un organe de base (37), les organes de base étant mobiles le long d'une paire d'arbres de guidage (43, 43) au moyen d'une tige filetée (34) s'insérant dans les organes de base pour déplacer latéralement les dispositifs d'étirage (5), et chaque organe de support porte une partie courbe à crémaillère (40) s'insérant dans le pignon (44) d'un moteur (48) pour modifier l'angle formé entre les dispositifs d'étirage et le sens de la course de la pellicule.

6. Dispositif selon la revendication 5, caractérisé en ce que lesdits dispositifs d'étirage (5) sont logés à l'intérieur d'un tunnel (39) maintenu à une température constante.

0 087 399

_Fig.1_

Li

15

30          31          1          31          30

43

34          37          43

5          40          5

44          44

48          α          48          A          48

18          Lu          39

_Fig.6_          3

2

11          6

8

9          _Fig.5_          1

8          6

T₂

8          6

T₁

_Fig.3_          _Fig.4_          6

8          11

11          8

8          9          1

0 087 399

Fig. 2